# EUROPÄISCHE PATENTSCHRIFT

(11) **EP 0 883 969 B1**
(45) Veröffentlichungstag und Bekanntmachung des Hinweises auf die Patenterteilung: **30.08.2000**
(21) Anmeldenummer: 97904436.9
(22) Anmeldetag: 13.02.1997
(51) Int. Cl.: H04Q 7/38

(54) **VERFAHREN ZUM BETRIEB VON TELEKOMMUNIKATIONS-ENDGERÄTEN ÜBER MINDESTENS ZWEI KOMMUNIKATIONSSYSTEME**
METHOD OF OPERATING TELECOMMUNICATION TERMINALS VIA AT LEAST TWO COMMUNICATION SYSTEMS
PROCEDE PERMETTANT DE FAIRE FONCTIONNER DES TERMINAUX DE TELECOMMUNICATIONS PAR L'INTERMEDIAIRE D'AU MOINS DEUX SYSTEMES DE COMMUNICATION

(30) Priorität: 13.02.1996 DE 19605233
(43) Veröffentlichungstag der Anmeldung: 16.12.1998
(73) Patentinhaber: DeTeMobil Deutsche Telekom MobilNet GmbH, 53227 Bonn (DE)
(72) Erfinder: CYRANKIEWICZ, Arthur, D-48165 Münster (DE); GRABS, Thomas, D-48341 Altenberge (DE); KAUSCHKE, Ulrich, D-48165 Münster (DE); KITTLAS, Rainer, D-48153 Münster (DE)
(74) Vertreter: Riebling, Peter, Dr.-Ing.
(86) Internationale Anmeldenummer: EP9700674
(87) Internationale Veröffentlichungsnummer: WO9730562

(56) Entgegenhaltungen:
- EP-A- 0 660 626
- DE-A- 4 344 702
- DE-A- 19 532 069
- GB-A- 2 282 730

## Beschreibung

### Hintergrund der Erfindung

Diese Erfindung beschäftigt sich mit einem Verfahren zum Betrieb von Telekommunikations-Endgeräten über mindestens zwei Kommunikationssysteme. Ein derartiges Endgerät wird im allgemeinen als Dual-Mode-Endgerät oder Dual-Mode-Handheld (DMH) bezeichnet.

Die Erfindung ist nicht auf eine bestimmte Art von übertragenen Daten beschränkt. Es kann jede Art der Datenübertragung verwendet werden, insbesondere analoge und digitale Daten, Sprachdaten, etc. Aus Gründen der einfacheren Darstellung werden diese unterschiedlichen Datentypen sowie die möglichen Übertragungsarten im folgenden nicht mehr einzeln aufgeführt.

### Diskussion des Standes der Technik

DMH, die in der Lage sind, zwei Kommunikationssysteme zu nutzen, sind bekannt. Es gibt z.B. DMH, die das DECT- und das GSM-System nutzen können (DECT: Digital European Cordless Telephone; GSM: Global System of Mobile Communication). DECT-Systeme sind wegen ihrer picozellulären Struktur in der Lage, hohe Teilnehmerdichten zu bewältigen und halten hinsichtlich ihrer Leistungsmerkmale einem Vergleich mit Komforttelefonen stand. Der Vorteil für den Nutzer derartiger DECT-Netze liegt in der wirtschaftlichen Realisierung, bei gleichzeitiger hoher Mobilität innerhalb der lokal begrenzten Netze.

Für die gleichzeitige Nutzung der Vorteile lokaler DECT-Netzte und einer flächendeckenden Versorgung durch Mobilfunkdienste, z.B. durch das GSM-System, werden Endgeräte benötigt, die verschiedene Technologien in einem einzigen Geräte vereinigen. Das DMH prüft die empfangene Signalstärke und schaltet zu dem Kommunikaationssystem, dessen Signalstärke höher ist. Dieses Vorgehen ist allerdings mit wesentlichen Nachteilen verbunden.

Verschiedene bekannte Endgeräte haben in Tests eindeutig erhebliche Schwächen bei der Auswahl und Beurteilung der Versorgung mit der einen oder anderen Technologie gezeigt, z.B. Schwächen bei der Beurteilung einer aufgrund von Mehrwegausbreitungen beeinträchtigten DECT-Versorgung. Die DECT-Kommunikation ist besonders anfällig und empfindlich gegenüber Mehrwegausbreitungen, da dieses System besonders für schnurlose Telekommunikation in geschlossenen Räumen konzipiert worden ist, in denen Mehrwegausbreitungen, z.B. wegen Reflexion, ignoriert werden können. DECT-Endgeräte verfügen daher nicht über effektive Kanalcodier- und Fehlerkorrekturverfahren bzw. Entzerrer.

Derartige Schwächen können auch auftreten, wenn bestimmte Voraussetzungen für den Einsatz eines speziellen oder zusätzlichen Leistungsmerkmals geprüft werden müssen (z.B. das Umschalten auf eine höhere Übertragungsrate).

Tests mit bekannten kombinierten DECT/GSM-Geräten, bei denen eine kritische oder überkritische Mehrwegausbreitung bezüglich des DECT-Systems und eine stark gestörte Sprachübertragung vorlagen, haben gezeigt, daß das DMH mit hoher Wahrscheinlichkeit in den DECT-Modus schaltet, obwohl der GSM-Modus sehr viel bessere Ergebnisse bezüglich der Übertragungsqualität geliefert hätte. Dieses Verhalten ist für ein DMH nicht wünschenswert, da möglichst die Verbindung mit der momentan besseren Übertragungsqualität gewählt werden sollte. Anderenfalls würden die Vorteile des Dual Mode durch die falsche Netzauswahl zunichte gemacht werden.

Problematisch beim Betrieb von Endgeräten, die für die Ausnutzung verschiedener Technologien für drahtlose Kommunikation geeignet sind, ist das Erkennen der Nutzbarkeit einer Drahtlos-Technologie in einem bestimmten Versorgungsgebiet. Insbesondere in Fällen, in denen in einem Gebiet zwei oder mehr Technologien bzw. Kommunikationssysteme zur Verfügung stehen, werden nicht unerhebliche Anforderungen gestellt, um nach gewissen Entscheidungskriterien die bestmögliche Technolgie bzw. Technologien für den aktuellen Betrieb des Endgeräts zu wählen.

Aus der EP-A-0 660 626 ist ein Verfahren zum Betrieb von Telekommunikations-Endgeräten über mindestens zwei Kommunikationssysteme bekannt geworden, wobei vor und/oder während des Betriebs dieses Endgeräts eine Prüfung von für die Kommunikationssysteme charakteristischen Parametern erfolgt und eine Auswahl zwischen zur Verfügung stehenden Kommunikationssystemen auf Grundlage dieser Prüfung durchgeführt wird.

### Zusammenfassung der Erfindung

Es ist eine Aufgabe der Erfindung, ein Verfahren zum Betrieb von Telekommunikations-Endgeräten, die mindestens zwei Telekommunikationssysteme unterstützen, vorzuschlagen, welches eine automatische und sichere Umschaltung auf das Telekommunikationssystem mit der momentan besseren Übertragungsqualität gewährleistet.

Diese Aufgabe der Erfindung wird durch das Verfahren gemäß Anspruch 1 gelöst. Das allgemeine Konzept der Erfindung sieht vor, nicht nur ein einziges, vorgegebenes Signal, wie die empfangene Signalstärke, für die Auswahl des Kommunikationssystems zu nutzen. Die Erfindung beruht auf einer Prüfung von für die Kommunikationssysteme charakteristischen Parametern und wählt das geeignete System auf Grundlage dieser Prüfung aus. Das Endgerät bucht sich in das ausgewählte System ein. Die Erfindung beruht auf der Tatsache, daß jedes Kommunikationssystem mit einem sogenannten "Signalfeld" versehen ist. In diesem Feld enthaltene Daten bzw. Informationen sind charakteristisch für das Netzwerk bzw. Kommunikationssystem und unabhängig von einem von Nutzer bestimmten Datentransfer. In einigen Klommunikationssystemen verändern sich die in diesem Feld enthaltenen Daten während einer bestimmten Zeitspanne nicht, weder die übertragenen Daten noch die Signalstärke. Diese können innerhalb dieser bestimmten Zeitspanne als unveränderlich betrachtet werden. Weiter werden die entsprechenden Signale kontinuierlich oder periodisch übertragen. Daher kann das Endgerät eine Prüfung der fraglichen Parameter aufgrund der mit dem Signalfeld verbundenen Daten bzw. Information durchführen.

In anderen Kommunikationssystemen kann sich das Signalfeld verändern. In diesen Fällen werden nicht nur das Signalfeld, sondern auch eine aus dem aktuellen Signalfeld errechnete Prüfsumme übertragen; die Berechnung der Prüfsumme erfolgt nach einem bestimmten Algorithmus. Das Endgerät empfängt sowohl das Signalfeld als auch die Prüfsumme und errechnet auf Grundlage des verwendeten Algorithmus selbst die Prüfsumme erneut, wobei es das empfangene Signalfeld verwendet. Bei diesen Kommunikationssystemen verwendet die Erfindung einen Vergleich zwischen der empfangenen und errechneten Prüfsumme, um einen oder mehrere der erfindungsgemäß verwendeten Parameter zu bestimmen. Der Algorithmus selbst ist nicht kritisch. Diese Ausführungsform bieten den zusätzlichen Vorteil, daß das Signalfeld sich während der Datenübertragung ändern kann, z.B. wenn ein Zeitsignal mit übertragen wird. Ein derzeit bevorzugtes Ausführungsbeispiel wird nachfolgend näher erläuert.

Für einen Zugriff auf das Signalfeld ist kein Einbuchen in das Kommunikationssystem erforderlich. Daher können die Parameter geprüft werden, ohne daß ein derartiges Einbuchen stattfindet.

Für den Fall, daß keines der geprüften System die Minimalanforderung erfüllt, wählt das Endgerät kein Kommunikationssystem aus und wiederholt die Prüfung nach einer bestimmten Zeitspanne. Wenn der Nutzer dennoch eine Verbindung herstellen möchte, z.B. in Notfällen, kann eine manuelle Eingriffssteuerung vorgesehen sein.

In Abhängigkeit von den derzeit möglichen bzw. vorhandenen Kommunikationssystemen können für die Prüfung unterschiedlicher Kommunikationssysteme unterschiedliche Parameter verwendet werden. Um festzustellen, welche Kommunikationssysteme derzeit möglich sind, kann das Verfahren als zusätzlichen Schritt eine Suche nach diesen Kommunikationssystemen umfassen. Diese Suche wird bevorzugt anhand der auch für die Prüfung verwendeten Parameter durchgeführt.

Die fraglichen Parameter können in einem in dem Endgerät enthaltenen Speicher abgelegt werden und bestimmte Parameter für alle gängigen Kommunikationssysteme umfassen.

Dieses Merkmal bietet die Möglichkeit, ein einziges Endgerät in allen gängigen Kommunikationssystemen zu nutzen. Unterstützt durch intelligente Netzwerkfunktionen kann der Nutzer mit der vorliegenden Erfindung sein Endgerät weltweit verwenden, was zu einer Entwicklung der Kommunikation von der heute noch ortsgebundenen hin zu einer personengebundenen Kommunikation führt.

Bevorzugt werden die für die Prüfung und ggf. Suche verwendeten Parameter auf Grundlage übertragungsbezogener Attribute ermittelt. Diese Attribute können ein Qualitäts- und ein Signalstärkekriterium umfassen. Dies stellt sicher, daß nicht nur die Stärke des empfangenen Signals, sondern auch die Qualität der Datenübertragung, die ein wesentliches Merkmal ist, verwendet wird, um das Kommunikationssystem auszuwählen. Es können weitere Parameter, wie die Dtaenübertragungsrate, verwendet werden oder die oben genannten Parameter ersetzen.

Moderne Kommunikationssysteme bieten eine Vielzahl von Diensten. In Abhängigkeit von dem gerade ausgewählten Dienst kann einer der Parameter kritisch sein, während andere von untergeordneter Bedeutung sind. Um diese Tatsache zu berücksichtigen, können die Parameter mit einen Gewichtsfaktor, z.B. einem Multiplikator, versehen werden, der von dem gerade gewählten Dienst und/oder anderen Umständen abhängen kann.

Die unterschiedlichen verfügbaren Systeme können in einer bestimmten Abfolge angeordnet sein, d.h. das wichtigste/dominante oder bevorzugte System wird als erstes geprüft, gefolgt von anderen Systemen, deren Reihenfolge ebenfalls festgelegt sein kann. Sobald das Endgerät ein System gefunden hat, das zu zufriedenstellenden Ergebnissen führt, bucht es sich in dieses System ein. Es ist selbstverständlich ebenfalls möglich, zuerst alle verfügbaren Systeme zu prüfen und danach eine Auswahl zu treffen. Das Endgerät kann die verfügbaren Systeme erneut prüfen, nach einer bestimmten Zeitspanne und/oder wenn sich die für die Prüfung verwendeten Parameter geändert haben. Wenn das ausgewählte System nicht dem wichtigsten/dominanten bzw. bevorzugten System entspricht, kann das Endgerät die für dieses System relevanten Parameter erneut prüfen, selbst wenn das derzeit ausgewählte System die Minimalanforderungen erfüllt oder übersteigt.

In einer bevorzugten Weiterbildung der Erfindung ist das Endgerät in der Lage, die Korrektur- bzw. Gewichtsfaktoren, Zeitintervalle und andere Elemente des Prüfungsvorgangs zu verändern. Diese Ausführungsform stellt ein intelligentes Endgerät bereit, das in der Lage ist, voreingestellte Werte in Abhängigkeit von den tatsächlichen Umständen zu verändern.

### Beschreibung einer bevorzugten Ausführungsform

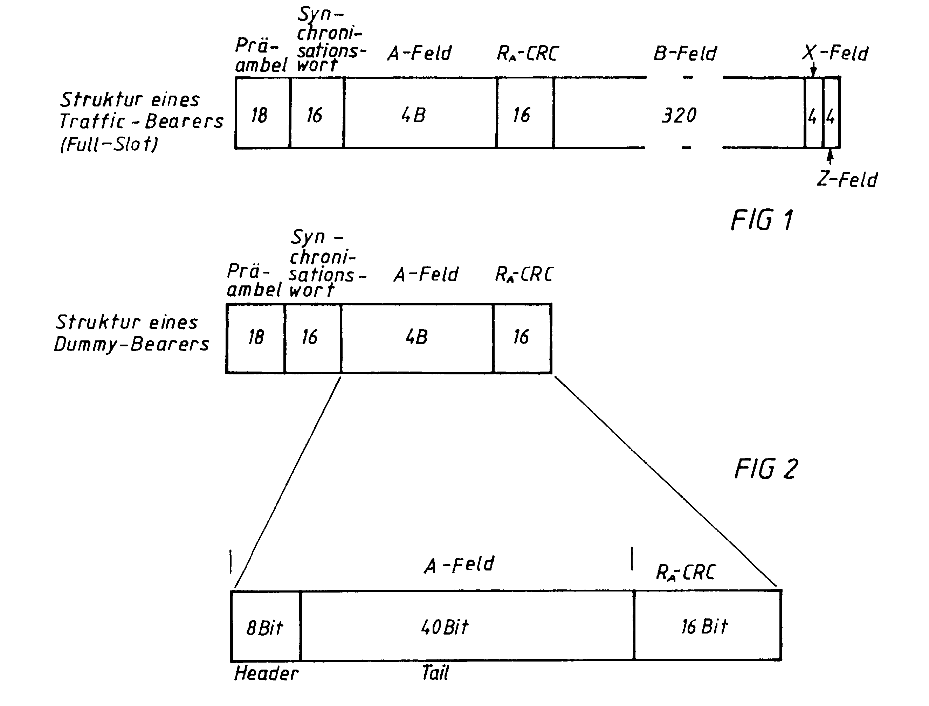

Die folgende Beschreibung stellt anhand eines Beispiels eine bevorzugte und besondere Ausführungsform der Erfindung unter Bezugnahme auf die beigefügten Zeichnungen dar. Dabei zeigt Fig. 1 die Struktur eines Traffic-Bearers und Fig. 2 die Struktur eines Dummy-Bearers.

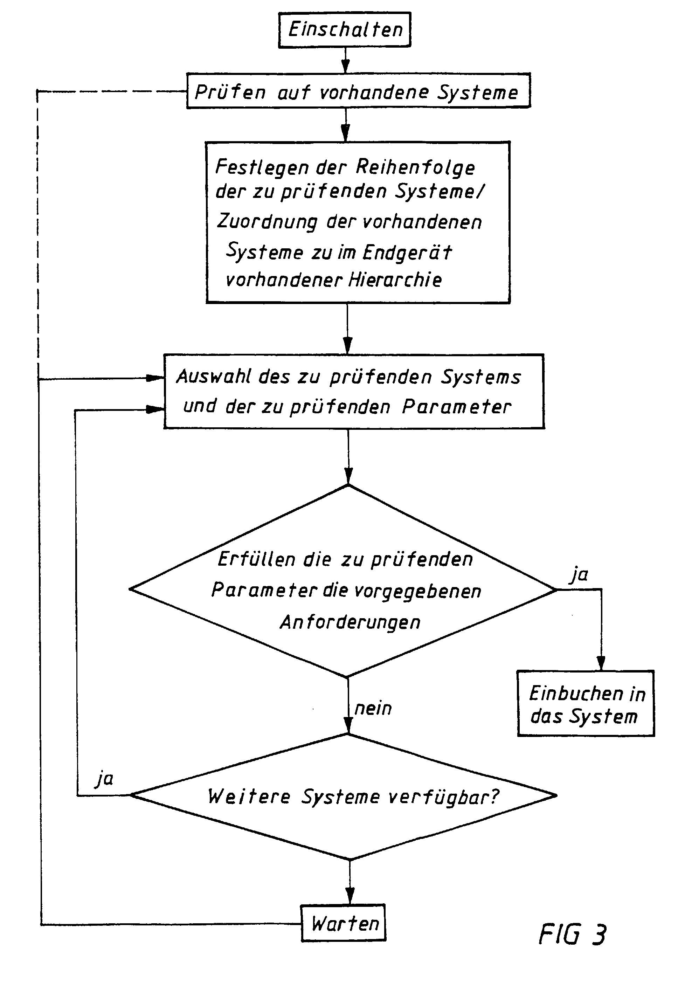

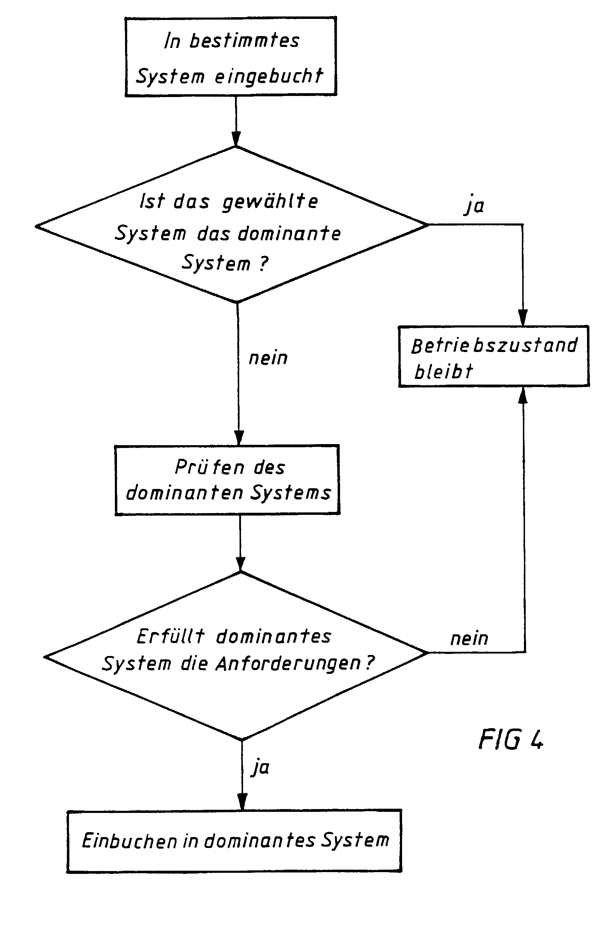

Die Fig. 3 und 4 zeigen Verfahrensschemata, die das Verfahren der vorliegenden Erfindung verdeutlichen.

Die folgende Beschreibung bezieht sich auf ein DMH bzw. ein zugehöriges Produktszenario. Für die Darstellung wurde ein DMH für DECT/GSM gewählt.

Das Signalfeld des DECT-System wird als A-Field bezeichnet, wobei auf dieses A-Field ein bestimmter Datenbereich namens R_{A}-CRC folgt. Der R_{A}-CRC stellt eine Prüfsumme dar, die durch einen Algorithmus aus dem A-Field errechtnet worden ist. Es sollte verstanden werden, daß die Erfindung nicht auf dieses nur zur Illustration dienende Beispiel beschränkt ist.

Das DMH arbeitet üblicherweise in einem automatischen Betreib, der der DECT-Verbindung eine höhere Priorität zuordnet, d.h. das DECT-System ist das wichtigste/dominante System. Beim Anschalten des Endgeräts wird zunächst geprüft, ob einen stabile DECT-Verbindung aufgebaut werden kann, bei der nur wenig oder keine Störungen vorliegen. Wenn diese Prüfung nicht erfolgreich ist, schaltet das System auf GSM um und prüft, ob eine GSM-Verbindung hergestellt werden kann bzw. besteht. Wenn keine GSM-Verbindung hergestellt werden kann, bucht sich das Endgerät in keines der Systeme ein, und die Versorgung mit DECT bzw. GSM wird abwechselnd geprüft.

Wenn das DMH sich in das GSM-Netzwerk eingebucht hat, wird periodisch überprüft, ob eine ausreichende DECT-Versorgung erstellt werden kann. Ist dies der Fall, bucht sich das DMH aus dem GSM-Netzwerk aus und schaltet in dem DECT-Modus um. Wenn keine ausreichende DECT-Versorgung erstellt werden kann. verbleibt das Gerät in seinem GSM-Modus.

Das beschriebene Verfahren wird durch Timer und Parameter kontrolliert, die intern konfiguriert sein können. Da das Verhalten des DMH von den für die Timer und Parameter vorgegebenen Werten abhängt, können diese Werte während des DMH-Projekts noch verändert werden.

Das Verfahren für eine qualitätsbezogene Detektierung einer ausreichenden DECT-Versorgung wird wie folgt durchgeführt:

Wenn innerhalb des Beobachtungsintervalls **t**_{**m**} das Qualitätskriterium **Q** (R_{A}-CRC des A-Field) **und** das Signalstärkekriterium **S** (Empfangspegel) erfüllt sind, dann gilt die Übertragungsqualität der betrachteten DECT-Versorgung als ausreichend.

Für **t**_{**m**}**, Q** und **S** sollen dabei folgende Definitionen gelten:
- Beobachtungsintervalls **t**_{**m**}:: beschreibt das Zeitintervall, in dem das DECT-Signal (Dummy- bzw. Traffic-Bearer) von dem DECT-Endgerät beobachtet werden.
- Qualitätskriterium **Q**:: betrachtet den R_{A}-CRC des A-Field von Dummy- bzw. Traffic-Bearer.
Das Qualitätskriterium **Q** ist erfüllt, wenn während des Beobachtungsintervalls **t**_{**m**} **q** von **m** möglichen R_{A}-CRC's korrekt erkannt bzw. bewertet worden sind. Alternativ wird das Kriterium als erfüllt angesehen, wenn ein bestimmter Prozentsatz der R_{A}-CRC's korrekt erkannt worden ist.
- Signalstärkekriterium **S**:: betrachtet den Empfangspegel an dem DECT-Gerät.
Das Signalstärkekriterium **S** ist erfüllt, wenn während des Beobachtungsintervalls **t**_{**m**} eine Anzahl **k** von Empfangspegelwerten von **n** Empfangspegelwerten am Empfänger größer oder gleich dem Wert **s** sind.

Das Endgerät empfängt das A-Field und den R_{A}-CRC des DECT-Systems. In Abhängigkeit von dem Beobachtungsintervall **t**_{**m**} wird eine Anzahl **m** von Übertragungen empfangen. Falls eine permanente Übertragung vorliegt, prüft das Endgerät das empfangene Signal periodisch und simuliert so eine wiederholte Übertragung. Jedes empfangene Signal wird durch das Endgerät hinsichtlich Korrektheit/Fehler geprüft.

Die Prüfung wird durchgeführt durch einen Vergleich zwischen dem empfangenen R_{A}-CRC und der von dem Endgerät errechneten Prüfsumme, unter Verwendung des empfangenen A-Field und desselben Algorithmus'. Die Anzahl der korrekten Signale wird mit einer vorgegebenen Anzahl **q** von empfangenen Signalen verglichen. Alternativ kann geprüft werden, ob ein bestimmter Prozentsatz der empfangenen Signale korrekt ist.

Bevorzugt werden dieselben Signale verwendet, um das Signalstärkekriterium **S** zu prüfen. Die Signalstärke selbst kann nach verschiedenen Standards gemessen werden, wobei diese Meßstandards für die vorliegende Erfindung nicht kritisch sind. In Abhängigkeit von dem gerade geprüften Kommunikationssystem können unterschiedliche Meßstandards verwendet werden.

Mit Hilfe der Parameter **t**_{**m**}**, q, k** und **s** können das Verfahren optimiert, die beiden Kriterien **Q** und **S** gewichtet und damit den Erfordernissen angepaßt werden. Die Werte **m** und **n** hängen vom Beobachtungsintervall **t**_{**m**} dem ab.

Der R_{A}-CRC des A-Field stellt aus folgenden Gründen die wirkungsvollste Auswertemöglichkeit bezüglich der Übertragungsqualität innerhalb des DECT-Protokolls dar:
- Der R_{A}-CRC des A-Field ist in allen Slot-Fomaten vorhanden.
- Der R_{A}-CRC besitzt eine große Wortlänge von 16 Bit, mit der die 48 Bit langen Signalisierungsdaten des A-Field sicher überprüft werden können.
- Die Auswertung des R_{A}-CRC nach dem beschriebenen Verfahren hat keine Auswirkungen auf die Konformität mit dem DECT-Standard.

Für die Implementierung des Verfahrens für eine qualitätsbezogene Detektierung einer ausreichenden DECT-Versorgung in das DMH ist lediglich eine Erweiterung der Software des DMH erforderlich. Die RFP's bzw. DECT-Controller bleiben von dieser Maßnahme unberührt.

Die Fig. 3 und 4 zeigen schematisch zwei Verfahrensabläufe. Fig. 3 betrifft die Auswahl eines bestimmten Systems unmittelbar nach dem Einschalten des Geräts, Fig. 4 eine während des Betriebs durchgeführte Prüfung.

Gemäß einem in Fig. 3 dargestellten Verfahren kann nach dem Einschalten eine Prüfung auf vorhandene Systeme erfolgen. Ebenfalls optional/stets vorhanden kann den vorhandenen Systemen eine bestimmte Reihenfolge zugeordnet werden. Danach werden das zu prüfende System, und die diesem System zugeordneten, zu prüfenden Parameter ausgewählt. Je nach dem Ergebnis der Prüfung bucht sich das Endgerät in das aktuelle System ein oder prüft, ob weitere Systeme vorhanden sind. Wenn ja, werden diese geprüft, wenn nein, erfolgt ein neuer Prüfungsdurchlauf nach einer bestimmten Wartezeit. Optional können für diesen Prüfungsdurchlauf nochmals zu vorhandenen System erfaßt werden.

Fig. 4 zeigt eine Prüfung, die nach dem Einbuchen in ein System vorgenommen werden kann. Das Endgerät prüft, ob das aktuelle System das dominante System ist (falls ein derartiges System existiert). Wenn ja, bleibt das Endgerät in seinem Betriebszustand, wenn nein, wird das dominante System geprüft. Erfüllt das dominante System die Anforderungen, bucht sich das Endgerät in das dominante System ein, ansonsten verbleibt es in seinem Betriebszustand. Gegebenenfalls kann die Prüfung nach einer bestimmten Zeitspanne wiederholt werden, falls das aktuelle System nicht das dominante System ist.

Die obenstehende Beschreibung stützt sich auf ein DMH, das entweder den DECT- oder den GSM-Modus verwendet. Die für die Auswahl der zu verwendenden Systems geprüften Parameter waren ein Qualitäts- und ein Signalstärkekriterium. Diese bevorzugte Ausführungsform schränkt den Schutzumfang der Erfindung nicht ein. Es ist selbstverständlich, daß der fachmann Veränderungen, Abwandlungen und Anpassungen an der vorliegenden Erfindung vornehmen kann, ohne von ihrem Gedanken wie in den Ansprüchen ausgedrückt abzuweichen.

## Patentansprüche

1. Verfahren zum Betrieb von Telekommunikations-Endgeräten über mindestens zwei Kommunikationssysteme, wobei vor und/oder während des Betriebs dieses Endgeräts eine Prüfung von für die Kommunikationssysteme charakteristischen Parametern erfolgt und eine Auswahl zwischen zur Verfügung stehenden Kommunikationssystemen auf Grundlage dieser Prüfung durchgeführt wird,
dadurch gekennzeichnet,
daß diese Parameter ein Qualitätskriterium und eine Signalstärkekriterium umfassen und aus im Signalfeld der Kommunikationssysteme enthaltenen Daten und Informationen bestimmt werden, wobei im Endgerät aus dem empfangenen Signalfeld eine Prüfsumme berechnet und mit einer zusammen mit dem Signalfeld übertragenen Prüfsumme verglichen wird, und aus dem Vergleich der Prüfsummen ein oder mehrere der Parameter bestimmt werden, die mit einem oder mehreren Korrektur- und/oder Gewichtsfaktoren verknüpft werden.

2. Verfahren nach Anspruch 1, dadurch gekennzeichnet, daß das Endgerät vor der Prüfung eine Suche nach vorhandenen Kommunikationssystemen durchführt.

3. Verfahren nach Anspruch 2, dadurch gekennzeichnet, daß das für diese Suche dieselben Parameter wie für die Prüfung verwendet werden.

4. Verfahren nach einem der vorhergehenden Ansprüche, dadurch gekennzeichnet, daß die Parameter auf Grundlage übertragungsbezogener Attribute ermittelt werden.

5. Verfahren nach Anspruch 1, dadurch gekennzeichnet, daß diese Korrektur- und/oder einem Gewichtsfaktoren während des Betriebs verändert werden.

6. Verfahren nach einem der vorhergehenden Ansprüche, dadurch gekennzeichnet, daß diese Prüfung der Parameter nach einer vorgegebenen Zeitspanne und/oder bei Veränderungen in diesen Parametern wiederholt wird und eine erneute Prüfung durchgeführt wird.

7. Verfahren nach einem der vorhergehenden Ansprüche, dadurch gekennzeichnet, daß für die Prüfung der Parameter jedes Kommunikationssystems eine bestimmte Zeitspanne vorgesehen ist, wobei das Terminal zu einem anderen Kommunikationssystem umschaltet und dessen Parameter prüft, sobald diese bestimmte Zeitspanne verstrichen ist.

8. Verfahren nach Anspruch 7, dadurch gekennzeichnet, daß diese Zeitspanne während des Betriebs verändert wird.

9. Verfahren nach einem der vorhergehenden Ansprüche, dadurch gekennzeichnet, daß die Kommunikationssysteme nacheinander, in einer vorgegebenen hierarchischen Abfolge geprüft werden.

10. Verfahren nach einem der vorhergehenden Ansprüche, dadurch gekennzeichnet, daß die Parameter aller verfügbaren Kommunikationssysteme geprüft werden, ehe eine Auswahl getroffen wird.

11. Verfahren nach einem der vorhergehenden Ansprüche, dadurch gekennzeichnet, daß die Übertragungsqualität als ausreichend gilt, wenn innerhalb eines Beobachtungsintervalls das Qualitätskriterium und das Signalstärkekriterium erfüllt sind.

12. Verfahren nach Anspruch 11, dadurch gekennzeichnet, daß das Qualitätskriterium erfüllt ist, wenn während des Beobachtungsintervalls eine Anzahl q von m möglichen Prüfsummen korrekt erkannt wurden.

13. Verfahren nach einem der Ansprüche 11 oder 12, dadurch gekennzeichnet, daß das Qualitätskriterium erfüllt ist, wenn während des Beobachtungsintervalls ein bestimmter Prozentsatz von Prüfsummen korrekt erkannt wurden.

14. Verfahren nach einem der Ansprüche 11-13, dadurch gekennzeichnet, daß das Signalstärkekriterium erfüllt ist, wenn während des Beobachtungsintervalls eine Anzahl k von n Empfangspegelwerten am Empfänger größer oder gleich einem vorgegebenen Wert ist.

## Claims

1. Method for the operation of telecommunication terminals via at least two communication systems, in which, before and/or during operation of the terminal, parameters characteristic of the communication systems are checked and a selection is made between the available communication systems on the basis of this check, characterized in that these parameters comprise a quality criterion and a signal strength criterion and are determined from data and information contained in the signal field of the communication systems, by computing a checksum in the terminal from the signal field received and comparing said checksum with a checksum transmitted together with the signal field, and from the comparison of the checksums determining one or more of the parameters which are combined with one or more correction and/or weighting factors.

2. Method according to Claim 1, characterized in that before making the check the terminal carries out a search for available communication systems.

3. Method according to Claim 2, characterized in that the same parameters are used for the search as for the check.

4. Method according to any one of the preceding claims, characterized in that the parameters are determined on the basis of transmission-related attributes.

5. Method according to Claim 1, characterized in that these correction and/or weighting factors are changed during operation.

6. Method according to any one of the preceding claims, characterized in that after a specified time slot and/or if changes in these parameters occur, this parameter check is repeated and a renewed check is carried out.

7. Method according to any one of the preceding claims, characterized in that a specific time slot is designated for checking the parameters of each communication system, wherein the terminal switches to another communication system and checks its parameters once this specific time slot has elapsed.

8. Method according to Claim 7, characterized in that this time slot is changed during operation.

9. Method according to any one of the preceding claims, characterized in that the communication systems are checked one after another in a specified hierarchical sequence.

10. Method according to any one of the preceding claims, characterized in that the parameters of all the available communication systems are checked before a selection is made.

11. Method according to any one of the preceding claims, characterized in that transmission quality is deemed adequate if the quality criterion and the signal strength criterion are satisfied within an observation interval.

12. Method according to Claim 11, characterized in that the quality criterion is satisfied if during the observation interval a number q out of m possible checksums have been correctly identified.

13. Method according to Claim 11 or 12, characterized in that the quality criterion is satisfied if during the observation interval a specific percentage of checksums have been correctly identified.

14. Method according to any one of Claims 11 to 13, characterized in that the signal strength criterion is satisfied if during the observation interval a number k out of n input level values at the receiver is greater than or equal to a specified value.

## Revendications

1. Procédé pour faire fonctionner des terminaux de télécommunication par l'intermédiaire d'au moins deux systèmes de communication, selon lequel avant et/ou après le fonctionnement du terminal, un contrôle de paramètres caractéristiques pour les systèmes de communication a lieu et une sélection est effectuée, à partir de ce contrôle, entre des systèmes de communication disponibles,
caractérisé en ce que ces paramètres comprennent un critère de qualité et un critère d'intensité de signaux et sont définis à partir des données et des informations contenues dans le champ de signaux des systèmes de communication, étant précisé que dans le terminal, une somme de contrôle est calculée à partir du champ de signaux reçu et est comparée à une somme de contrôle transmise avec le champ de signaux, et qu'à partir de la comparaison des sommes de contrôle sont définis un ou plusieurs des paramètres qui sont liés à un ou plusieurs facteurs de correction et/ou de pondération.

2. Procédé selon la revendication 1, caractérisé en ce que le terminal, avant le contrôle, effectue une recherche des systèmes de communication présents.

3. Procédé selon la revendication 2, caractérisé en ce que pour la recherche, on utilise les mêmes paramètres que pour le contrôle.

4. Procédé selon l'une des revendications précédentes, caractérisé en ce que les paramètres sont déterminés sur la base d'attributs relatifs à la transmission.

5. Procédé selon la revendication 1, caractérisé en ce que ces facteurs de correction et/ou de pondération sont modifiés pendant le fonctionnement.

6. Procédé selon l'une des revendications précédentes, caractérisé en ce que ce contrôle de paramètres est effectué après un délai prédéfini et/ou est renouvelé, en cas de modifications des paramètres, et un nouveau contrôle est effectué.

7. Procédé selon l'une des revendications précédentes, caractérisé en ce que pour le contrôle des paramètres de chaque système de communication, un délai défini est prévu, étant précisé que le terminal passe à un autre système de communication et contrôle les paramètres de celui-ci dès que ce délai défini est écoulé.

8. Procédé selon la revendication 7, caractérisé en ce que ce délai est modifié pendant le fonctionnement.

9. Procédé selon l'une des revendications précédentes, caractérisé en ce que les systèmes de communication sont contrôlés successivement suivant un ordre hiérarchique prédéfini.

10. Procédé selon l'une des revendications précédentes, caractérisé en ce que les paramètres de tous les systèmes de communication disponibles sont contrôlés avant qu'une sélection ne soit faite.

11. Procédé selon l'une des revendications précédentes, caractérisé en ce que la qualité de transmission est considérée comme suffisante si le critère de qualité et le critère d'intensité de signaux sont remplis à l'intérieur d'un intervalle d'observation.

12. Procédé selon la revendication 11, caractérisé en ce que le critère de qualité est rempli si, pendant l'intervalle d'observation, sur m sommes de contrôle possibles, un nombre q de ces valeurs a été reconnu correct.

13. Procédé selon la revendication 11 ou 12, caractérisé en ce que le critère de qualité est rempli si, pendant l'intervalle d'observation, un pourcentage défini de sommes de contrôle a été reconnu correct.

14. Procédé selon l'une des revendications 11 à 13, caractérisé en ce que le critère d'intensité de signaux est rempli si, pendant l'intervalle d'observation, sur n valeurs de niveau de réception n au niveau du récepteur, un nombre k de ces valeurs est supérieur ou égal à une valeur prédéfinie.
